# EUROPEAN PATENT APPLICATION

(11) **EP 4 674 700 A1**
(43) Date of publication of application: **07.01.2026**
(21) Application number: 25186747.9
(22) Date of filing: 01.07.2025
(51) Int. Cl.: B60T 1/14, B60T 13/74, B61H 7/08, B61H 7/12, F16B 35/06, F16B 39/282, F16B 39/36, F16D 63/00, F16D 121/20

(54) **A SYSTEM FOR CONNECTING A SUSPENSION MEMBER TO A MAGNETIC DEVICE IN A MAGNETIC TRACK BRAKE DEVICE**

(30) Priority: 01.07.2024 US 202463666457 P
(71) Applicant: Transportation IP Holdings, LLC, Norwalk, CT 06851 (US)
(72) Inventor: Montua, Sebastian, 78343 Gaienhofen (DE); Karunanidhi, Manjunath, 560015 Bangalore (IN)
(74) Representative: K&L Gates LLP

(57) **Abstract**

A system, e.g., for connecting a tie bar or other suspension member to a magnetic device in a magnetic track brake device, includes a bolt, a washer, and a taper dowel. The bolt includes a shaft having a first end and a second end, and a head attached to the first end. The washer is configured to fit about the shaft. The taper dowel is configured to fit about the shaft. The second end of the bolt shaft is configured to fit into a first aperture in the magnetic device, and the taper dowel, disposed about the shaft, is configured to fit within a second aperture in the suspension member. The second aperture corresponds in shape to an outer peripheral surface of the taper dowel, for the bolt to connect the suspension member with the magnetic device.

## Description

### CROSS-REFERENCE TO RELATED APPLICATIONS

This application claims benefit to U.S. Provisional Application No. 63/666,457, filed July 1, 2024, entitled "MAGNETIC TRACK BRAKE SYSTEM," the entire disclosure of which is hereby incorporated by reference herein.

### BACKGROUND

### Technical Field.

Aspects of the subject matter described herein relate to rail vehicles and, more specifically, to magnetic track brakes for rail vehicles.

### Discussion of Art.

A magnetic track brake device is used to slow or stop a rail vehicle's motion using electromagnetic force to bring a set of pole shoes (e.g., brake pad-like devices) into contact with a track. For example, a magnetic track brake device may include a magnetic device (e.g., a brake magnet), a pole shoe (or shoes) attached to the brake magnet, a suspension, a power control unit, and a track rod. The brake magnet includes a coil wound around an iron core, which is enclosed by horseshoe-shaped magnets. Under designated circumstances (e.g., emergency braking), the power control unit applies electrical current (e.g., from a battery) to the brake magnet coil, generating a magnetic field. This causes an attractive force between the brake magnet (with the pole shoe(s) attached to it) and the underlying metal track rail. As facilitated by the suspension, the pole shoes move downwards to press against the rail. The resulting friction converts the kinetic energy of vehicle movement into dissipated heat until the vehicle stops or the magnetic track brake device is deactivated. Some magnetic track brake devices may use a bolted joint to connect the brake magnet (and pole shoes) to the suspension, e.g., to a tie bar portion of the suspension. In emergency braking conditions for rail vehicles, high shear forces may be exerted on the bolted joint.

Some magnetic track brake devices have used gripper contact bolts between the brake magnet and the suspension (e.g., tie bar) to reduce the shear force in the bolts connecting the brake magnet and the tie bar. However, using the grippers causes permanent deformation of the tie bar, which cannot be reused. In such a way, the tie bar needs to be replaced frequently, so it is an expensive solution. Moreover, there is a loss of preload on the bolt between the tie bar and the brake magnet due to the high stiffness of the grippers.

It may be desirable to provide a magnetic track brake device that differs from existing devices, as relating to how a magnetic device is attached to a suspension.

### SUMMARY

**In** an embodiment, a system, e.g., for connecting a tie bar or other suspension member to a magnetic device in a magnetic track brake device, includes a bolt, a washer, and a taper dowel. The bolt includes a shaft having a first end and a second end, and a head attached to the first end. The washer is configured to fit about the shaft. The taper dowel is configured to fit about the shaft. The second end of the bolt shaft is configured to fit into a first aperture in the magnetic device, and the taper dowel, disposed about the shaft, is configured to fit within a second aperture in the tie bar or other suspension member. The second aperture corresponds in shape to an outer peripheral surface of the taper dowel, for the bolt to connect the suspension member with the magnetic device.

In an embodiment, a magnetic track brake device includes a suspension member (e.g., a tie bar), a magnetic device, and a bolt, a washer, and a taper dowel connecting the suspension member to the magnetic device. According to another aspect, the taper dowel may be frustoconical in shape. For example, the taper dowel may include a frustoconical body defining the outer peripheral surface and having a cylindrical through bore with a diameter corresponding to the diameter of the bolt shaft, where the outer peripheral surface is in direct contact with the suspension member and the washer is positioned between the bolt head and the frustoconical body. In one embodiment, the bolt and washer may be separate components. In another embodiment, the bolt and the washer may be formed as an integral bolt unit having a shaft, a washer flange integral with the shaft, and a bolt head integral with the washer flange. The bolt head and washer flange may be a serrated flange bolt head that provides additional locking power and reduces loosening from jarring or vibration.

In another embodiment, a system for connecting a suspension member (e.g., a tie-bar) to a magnetic device in a magnetic track brake device includes a bolt, a washer, and a hollow straight dowel. The bolt includes a shaft having a first end and a second end, and a head attached to the first end. The washer and the hollow straight dowel are configured to fit about the shaft. The shaft of the bolt is configured to fit into a first aperture in the magnetic device and into a second aperture in the suspension member. The hollow straight dowel is configured to fit both within an upper portion of the first aperture in the magnetic device and in a lower portion of the second aperture in the suspension member. The upper portion and the lower portion both correspond in shape to an outer peripheral surface of the hollow straight dowel, for the bolt (disposed through the dowel) to connect the suspension member with the magnetic device.

### BRIEF DESCRIPTION OF THE DRAWINGS

The inventive subject matter may be understood from reading the following description of non-limiting embodiments, with reference to the attached drawings, wherein below:
FIG. 1 illustrates an embodiment of a magnetic track brake system, in perspective and detail cross-sectional views according to at least one aspect of the disclosure;
FIG. 2 is a cross-sectional view of an embodiment of the magnetic track brake system according to at least one aspect of the disclosure;
FIG. 3 is a perspective view of an embodiment of a taper dowel according to at least one aspect of the disclosure;
FIG. 4A and FIG. 4B are side cross-sectional and top plan views, respectively, of the taper dowel of FIG. 3;
FIG. 5 is a perspective view of an integral bolt unit according to at least one aspect of the disclosure; and
FIGS. 6 and 7 are exploded and assembled views, respectively, partially in cross section, of another embodiment of a magnetic track brake system according to at least one aspect of the disclosure.

### DETAILED DESCRIPTION

Embodiments of the subject matter described herein relate to a system, e.g., for connecting a tie bar or other suspension member to a magnetic device in a magnetic track brake device, which includes a bolt, a washer, and a taper dowel. The bolt includes a shaft having a first end and a second end, and a head attached to the first end. The washer is configured to fit about the shaft. The taper dowel is configured to fit about the shaft. The second end of the bolt shaft is configured to fit into a first aperture in the magnetic device, and the taper dowel, disposed about the shaft, is configured to fit within a second aperture in the suspension member (e.g., tie bar). The second aperture corresponds in shape to an outer peripheral surface of the taper dowel, for the bolt to connect the suspension member with the magnetic device.

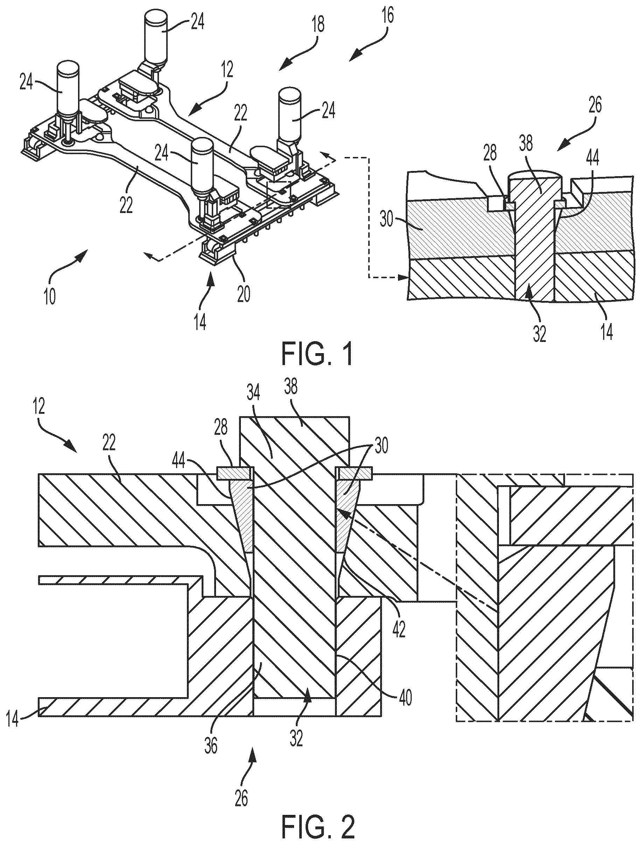

Aspects of the invention may improve shear load capacities and lower the risk of the failure of a bolted joint between a tie bar or other suspension member and the magnetic device of the magnetic track brake device due to the high shear load in emergency braking conditions for rail vehicles. The taper dowel used in embodiments of the invention may reduce lateral movement of adjoined components around the bolt joint as shown in FIG. 1. According to another aspect, the taper dowel absorbs the shear load, allowing the bolt to load less in shear direction with reduced loss of tensile loads during the application.

Turning now to FIGS. 1 and 2, in an embodiment, a magnetic track brake system 10 is provided for connecting a suspension member 12 to a magnetic device 14 of a magnetic track brake device 16. The suspension member 12 is any part of a suspension 18 that supports the magnetic device underneath a rail vehicle and above a track rail; portions of the suspension allow the magnetic device to move downwards towards the rail when the magnetic device is activated to bring one or more pole shoes 20 (attached to the magnetic device) into contact with the rail for braking. One example of a suspension member is a tie bar 22, two of which are shown in FIG. 1. The tie bars connect the two 'halves' of the magnetic track brake system into an interconnected assembly, e.g., there are two magnetic devices on either side of the assembly for operation in concert to press against the two parallel rails of a railroad track. However, the magnetic device(s) could be connected to some other part of the suspension, e.g., to a member that does not interconnect the two halves of the magnetic track brake system, but instead supports and/or interconnects the magnetic device(s) to actuation cylinder portions 24 of the suspension, or to other portions of the suspension.

For connecting the magnetic device 14 to the suspension member 12, the system 10 includes a bolt 26, a washer 28, and a taper dowel 30. The bolt includes a shaft 32 with a first end 34 and a threaded, second end 36, and a head 38 attached to the first end 34. The washer 28 is configured to fit about the shaft 32. The taper dowel 30 is configured to fit about the shaft 32. The second end 36 of the bolt shaft 32 is configured to fit into a threaded first aperture 40 in the magnetic device 14, and the taper dowel 30, disposed about the shaft 32, is configured to fit within a second aperture 42 in the tie bar 22 or other suspension member 12. At least part of the second aperture 42 corresponds in shape to an outer peripheral surface 44 of the taper dowel 30, for the bolt to connect the suspension member with the magnetic device. For example, there may be a press fit of 0.01 mm between the outer peripheral surface of the taper dowel and the second aperture. The fit between the bolt shaft and the taper dowel may be 0.05 mm.

According to one aspect, the bolt 26 as interfaced with the taper dowel 30 may have an improved shear capability relative to a bolt used to attach a tie bar or other suspension member 12 to the magnetic device 14 without the taper dowel. The presence of the taper dowel reduces (e.g., prevents) lateral movement of the suspension member 12 relative to the magnetic device 14. By absorbing shear load, the taper dowel allows the shaft 32 to load less in a shear direction with reduced loss of tensile loads, relative to a shaft of a bolt used without the taper dowel.

The size of the bolt 26 may be from M16 to M20, with corresponding shear capacity ranging from 6.69 kN to 11.5 kN. The relationship between the bolt size and shear capacity is shown in the table below. The bolt may be coupled to the suspension member and magnetic

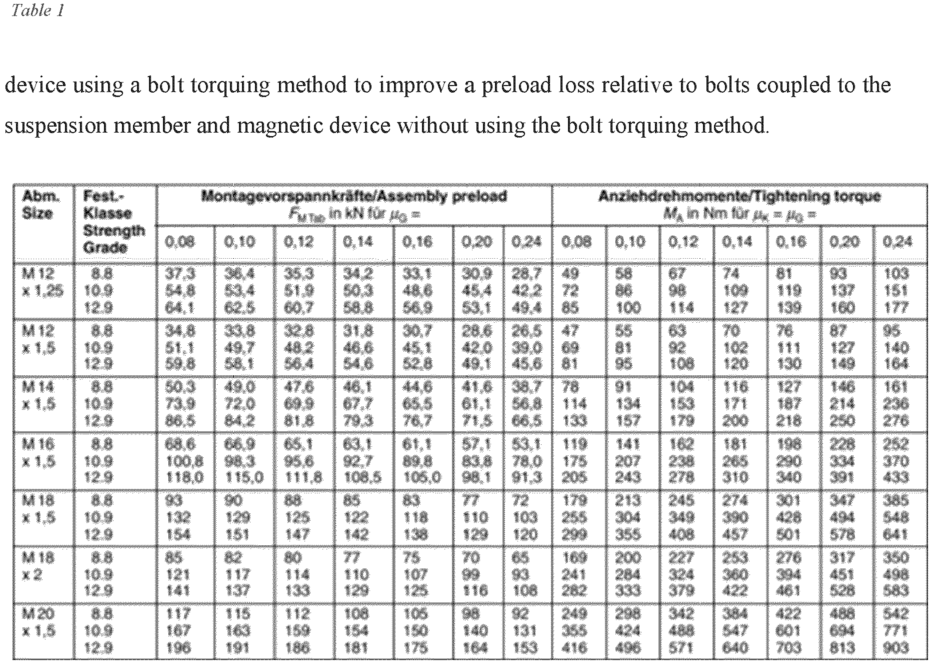

The bolt 26 may have a hex-serrated flange bolt head, for improving joint stiffness, providing additional locking power, and reducing instances of loosening from jarring or vibration of the bolt, relative to the bolt without a hex-serrated flange bolt head.

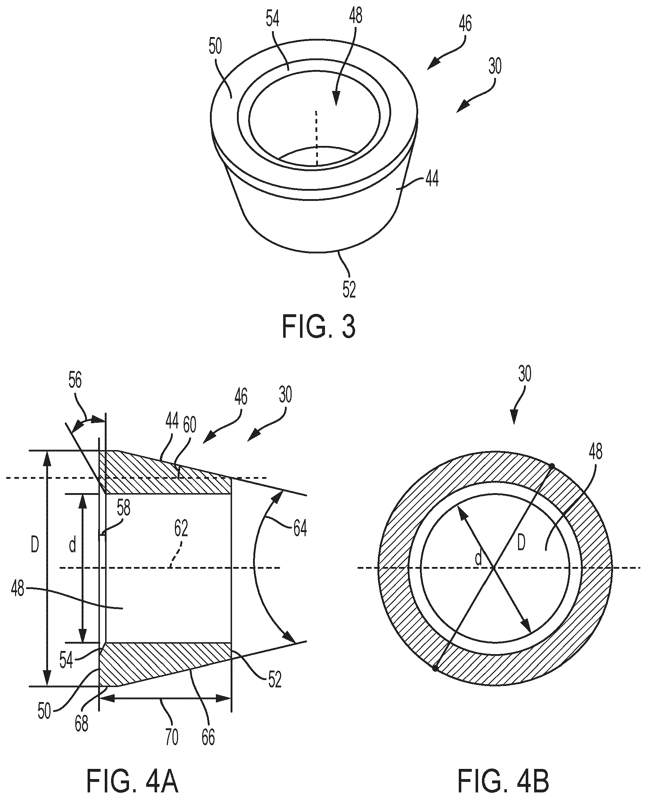

Turning to FIG. 3, FIG. 4A, and FIG. 4B, the taper dowel 30 may include a frustoconical body 46 defining the outer peripheral surface 44 and having a cylindrical through bore 48 with a diameter corresponding to the diameter of the bolt shaft 32. When installed, the outer peripheral surface 44 is in direct contact with the suspension member 12, and the washer 28 is positioned between the bolt head 38 and the frustoconical body 46. The frustoconical body 46 includes a first end surface 50 and a second end surface 52 parallel to the first end surface, which are interconnected by the outer peripheral surface 44. The second end surface is smaller in outer diameter than the first end surface. When installed, the first end surface 50 supports the washer 28 around the bolt shaft 32.

In embodiments, the taper dowel includes a chamfer 54 as a transitioning edge that connects the first end surface 50 and the inner peripheral surface of the through-bore 48. The chamfer 54 may have a chamfer angle 56 (the angle between the chamfer surface and the first end surface 50) of from 25 to 35 degrees, e.g., 30 degrees, and a depth 58 (dimension of the chamfer parallel to a longitudinal axis 62 of the through-bore 48) of from 0.3mm to 1mm, e.g., 0.5mm.

With reference to FIG. 4A and FIG. 4B, a diameter D of the first end surface 50 of the frustoconical body 46 of the taper dowel 30 may be greater, for example, 1.5 times greater, than a diameter length d of the cylindrical through bore 48. A non-zero degree side surface angle 60 exists between the frustoconical body 46's outer peripheral surface 44 and the longitudinal axis 62 of the cylindrical through-bore 48. The angle 60 may be, for example, from 10 degrees to 15 degrees, e.g., 13 degrees +/- 0.25 degrees. A cone angle 64 of the body 46 is double the value of the angle 60. In an embodiment, the outer peripheral surface 44 includes a frustoconical portion 66 angled at the non-zero degree angle 60 relative to the axis 62, and an end portion 68, adjacent the first end surface 50, perpendicular to the first end surface (and parallel to the longitudinal axis 62). In another embodiment, the taper dowel lacks the end portion 68, such that the outer peripheral surface 44 is connected to the first end surface 50 and is oriented relative thereto at the side surface angle 60. In an embodiment, the taper dowel has a height 70 (longest dimension along the longitudinal axis) of from 10mm to 20mm. In one embodiment, the height 70 is 14mm.

The frustoconical body of the taper dowel may be made of steel with a tensile strength ranging from 515 MPa to 860 MPa.

In one embodiment, the height 70 of the taper dowel's frustoconical body 46 is greater than the thickness of the tie bar or other suspension member, so the outer peripheral surface 44 will be in direct contact with both the suspension member and the magnetic device. In such an embodiment, the aperture 40 of the magnetic device would include a tapered portion complementary in shape to the outer peripheral surface of the taper dowel adjacent the second end surface 52.

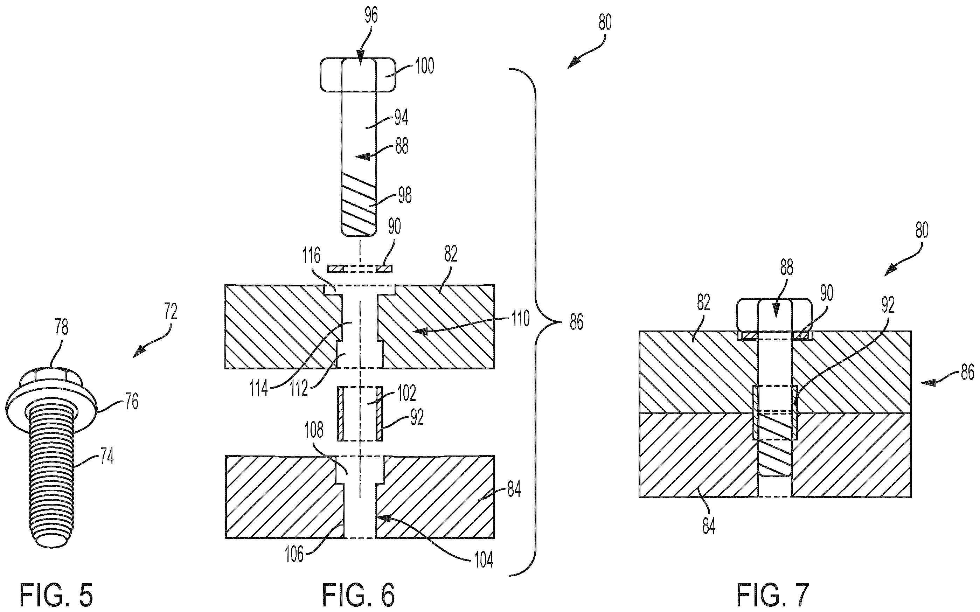

In an embodiment, with reference to FIG. 5, the bolt 26 and the washer 28 are formed as an integral bolt unit 72 having a shaft 74, a washer flange 76 integral with the shaft 74, and a bolt head 78 integral with the washer flange. Using this type of bolt, it is contemplated that the joint stiffness can be improved and the preload loss reduced.

Turning now to FIGS. 6 and 7, in an embodiment, a magnetic track brake system 80 is provided for connecting a suspension member 82 (e.g., tie bar) to a magnetic device 84 of a magnetic track brake device 86. The system 80 includes a bolt 88, a washer 90, and a hollow straight dowel 92. The bolt includes a shaft 94 with a first end 96 and a threaded, second end 98, and a head 100 attached to the first end. The washer is configured to fit about the bolt shaft. The hollow straight dowel includes a cylindrical body which defines a cylindrical central through-bore 102, e.g., the body has a cylindrical outer surface and a concentric cylindrical inner surface and with a uniform wall thickness between the two. The hollow straight dowel is configured to fit about the bolt shaft. The magnetic device includes a first aperture 104, which includes a threaded, lower portion 106 dimensioned to receive the second end of the bolt shaft and an upper portion 108 dimensioned to receive the hollow straight dowel, e.g., the upper portion has a diameter corresponding to the outer diameter of the hollow straight dowel. The suspension member 82 includes a second aperture 110, which includes a lower portion 112 dimensioned to receive the hollow straight dowel, an intermediate portion 114 connected to the lower portion and dimensioned to receive the bolt shaft, and an upper portion 116 connected to the intermediate portion and configured to receive at least the washer 90. For connecting the suspension member to the magnetic device, the hollow straight dowel is disposed in the first aperture 104, the suspension member is placed into contact with the magnetic device for the hollow straight dowel to be received in the second aperture 110, the washer is placed in the upper portion 116, and the bolt is passed through the washer, down through the second aperture, through the hollow straight dowel, and threaded into the first aperture 104. In operation, it is contemplated that the hollow straight dowel redistributes or redirects shear forces in an improved manner relative to assembling a suspension member and magnetic device using a bolt without a hollow straight dowel.

In an embodiment, the magnetic device includes a brake magnet, having a coil wound around an iron core, enclosed by magnets. However, in other embodiments, the magnetic device may be configured differently, e.g., aspects of the invention are applicable to different type of electromagnets that are attached to a suspension member in a magnetic brake device. The magnetic device is installed on a vehicle or other machinery in motion, and is configured for the electromagnet of the device to be actuated (with an electric current) to cause the electromagnet (or a brake pad-like device or the like, attached to the electromagnet) to move into place against a metal part adjacent the vehicle or machinery, to decelerate the vehicle or machinery.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and clauses, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and clauses, range limitations may be combined and/or interchanged, such ranges may be identified and include all the sub-ranges contained therein unless context or language indicates otherwise. This written description uses examples to disclose the embodiments, including the best mode, and to enable a person of ordinary skill in the art to practice the embodiments, including making and using any devices or systems and performing any incorporated methods.

Embodiments may be described in connection with a rail vehicle system, such as a locomotive or switcher, or other types of vehicle systems, such as automobiles, trucks (with or without trailers), buses, marine vessels, aircraft, unmanned aircraft (e.g., drones), mining vehicles, agricultural vehicles, or other off-highway vehicles. Vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers), or virtually or logically coupled but not mechanically coupled. For example, vehicles may be logically but not mechanically coupled when the separate vehicles communicate with each other to coordinate movements of the vehicles with each other so that the vehicles travel together (e.g., as a convoy, swarm, consist, platoon). Calculations and computations, such as navigation processes, may be performed on-board the vehicle systems or off-board the vehicle systems and then communicated to the vehicle systems. Whether on-board or off-board, a vehicle control system may operate a vehicle system and receive and process sensor inputs, operator inputs, operational parameters, vehicle parameters, and route parameters, etc.

Movement of a vehicle system may include propelling the vehicle forward or backward along a direction of travel, as well as slowing or stopping the vehicle. Movement further may include turning left or right, and increasing or decreasing elevation or depth. Movement further may include determining or setting a vehicle speed, changing a vehicle speed, and matching speeds and directions between vehicles in a vehicle group. Indirectly, movement of the vehicle may include ramping up (or down) power sources; and this may include energizing electrical circuits or buses, setting fuel flow rates, setting engine RPM rates, and the like.

Terms such as "processing," "computing," "calculating," or "determining" refer to operations carried out by the control circuit, which may include computing systems or electronic devices that manipulate data represented as physical (electronic) quantities within memory or registers. One or more components may be described as "configured to," "configurable to," "operable/operative to," "adapted/adaptable to," or similar terms. Unless explicitly stated, these terms encompass components in both active and inactive states. Unless stated otherwise, terms like "including" or "having" should be interpreted as open-ended (i.e., "including but not limited to"). Numeric claim recitations generally mean "at least" the stated number, and disjunctive terms like "A or B" should be interpreted to include either or both unless explicitly specified. Operations in any claim may generally be performed in any order unless explicitly stated. The recitation "at least one of A, B, and C" should be interpreted as any combination of A, B, and C, such A alone, B alone, C alone, A and B together, A and C together, B and C together, and/or A, B, and C together. The recitation "at least one of A, B, or C" should be interpreted to include A alone, B alone, C alone, A and B together, A and C together, B and C together, and/or A, B, and C together.

This written description may disclose several embodiments of the subject matter, including the best mode, and may enable one of ordinary skill in the relevant art to practice the embodiments of subject matter, including making and using any devices or systems and performing any incorporated methods. The patentable scope of the subject matter is defined by the claims, and may include other embodiments that may occur to one of ordinary skill in the art. Such other embodiments may be intended to be within the scope of the claims if they may have structural elements that may not differ from the literal language of the claims, or if they may include equivalent structural elements with insubstantial differences from the literal languages of the claims.

## Claims

1. A system (10) for connecting a suspension member (12) to a magnetic device (14) in a magnetic track brake device (16), comprising:
a bolt (26) comprising a shaft (32) having a first end (34) and a second end (36), and a head (38) attached to the first end;
a washer (28) configured to fit about the shaft; and
a taper dowel (30) configured to fit about the shaft,
wherein the second end of the bolt shaft is configured to fit into a first aperture (40) in the magnetic device and the taper dowel disposed about the shaft is configured to fit within a second aperture (42) in the suspension member, the second aperture corresponding in shape to an outer peripheral surface (44) of the taper dowel, for the bolt to connect the suspension member with the magnetic device.

2. The system of claim 1 installed on the magnetic track brake device, wherein the bolt has an improved shear capability relative to a bolt used to attach the suspension member to the magnetic device without the taper dowel.

3. The system of claim 1 or 2, wherein the suspension member comprises a tie bar (22), and the taper dowel reduces lateral movement of the tie-bar relative to the magnetic device.

4. The system of any of the preceding claims, wherein the taper dowel is configured to absorb shear load and allow the shaft to load less in a shear direction with reduced loss of tensile loads relative to a shaft of a bolt used without the taper dowel.

5. The system of any of the preceding claims, wherein at least one of:
the bolt is coupled to the suspension member and magnetic device using a bolt torquing method to improve a preload loss relative to bolts coupled to the suspension member and magnetic device without using the bolt torquing method, or
the bolt comprises a serrated flange bolt head configured to improve joint stiffness, provide additional locking power, and reduce loosening from jarring or vibration of the bolt, relative to the bolt without a serrated flange bolt head.

6. The system of any of the preceding claims, wherein:
the taper dowel comprises a frustoconical body (46) defining the outer peripheral surface and having a cylindrical through bore (48) with a diameter (d) corresponding to a diameter of the bolt shaft, wherein the outer peripheral surface is configured to be in direct contact with the suspension member, and
the washer is positioned between the bolt head and the frustoconical body.

7. The system of claim 6, wherein the frustoconical body comprises a first end surface (50) and second end surface (52) parallel to the first end surface, the first and second end surfaces interconnected by the outer peripheral surface, wherein the first end surface is configured to support the washer around the bolt shaft, and wherein the second end surface is smaller than the first end surface.

8. The system of claim 7, wherein at least one of:
a height (70) between the first end surface (50) and second end surface (52) of the frustoconical body of the taper dowel is greater than a diameter length of the cylindrical through bore, or
a height (70) of the frustoconical body is larger than a thickness of the suspension member for the outer peripheral surface of the taper dowel to be in direct contact with both the suspension member and the magnetic device.

9. A magnetic track brake device (16) comprising:
a suspension member (12);
a magnetic device (14); and
a bolt (26), a washer (28), and a taper dowel (30) connecting the suspension member to the magnetic device.

10. The device of claim 9, wherein the suspension member and the magnetic device are connected by the bolt, the bolt having a bolt shaft (32) and a bolt head (38), with the washer positioned between the bolt head and the suspension member and the taper dowel positioned between the bolt shaft and the suspension member.

11. The device of claim 9 or 10, wherein the suspension member has a through bore (48) with a frustoconical surface to fit an outer frustoconical surface of the taper dowel.

12. The device of any of the preceding claims, wherein the suspension member has a through bore with a depth to fit a height (70) of a frustoconical body (46) of the taper dowel.

13. The device of any of the preceding claims installed on a vehicle wherein:
the magnetic device comprises a brake magnet having a coil wound around a ferromagnetic core, enclosed by magnets, and
the device is configured for an electric current to flow through the coil to cause the brake magnet to become magnetically attracted to a metal rail on which the vehicle travels to move a pole shoe (20) attached to the brake magnet into contact with the rail to decelerate the vehicle.

14. The device of any of the preceding claims, wherein the bolt and the washer are formed as an integral bolt unit (72) comprising a shaft (74), a washer flange (76) integral with the shaft, and a bolt head (78) integral with the washer flange.

15. A system (80) for connecting a suspension member (82) to a magnetic device (84) in a magnetic track brake device (86), comprising:
a bolt (88) comprising a shaft (94) having a first end (96) and a second end (98), and a head (100) attached to the first end;
a washer (90) configured to fit about the shaft; and
a hollow straight dowel (92) configured to fit about the shaft;
wherein the shaft of the bolt is configured to fit into a first aperture (104) in the magnetic device and into a second aperture (110) in the suspension member, and the hollow straight dowel disposed about the shaft is configured to fit both within an upper portion (116) of the first aperture in the magnetic device and in a lower portion (112) of the second aperture in the suspension member, the upper portion and the lower portion both corresponding in shape to an outer peripheral surface of the hollow straight dowel, for the bolt to connect the suspension member with the magnetic device.
